Europäisches Patentamt

European Patent Office

Office européen des brevets

(19)

(11) **EP 0 735 330 A1**

(12) **EUROPÄISCHE PATENTANMELDUNG**

(43) Veröffentlichungstag:
**02.10.1996 Patentblatt 1996/40**

(51) Int. Cl.⁶: **F24F 12/00**, F28D 15/02

(21) Anmeldenummer: 95104479.1

(22) Anmeldetag: **27.03.1995**

(84) Benannte Vertragsstaaten:
**AT BE CH DE DK ES FR IT LI LU NL PT SE**

(71) Anmelder:
• **Noremat GmbH Nossen**
  **D-01683 Nossen (DE)**
• **INSTITUT FÜR LUFT- UND KÄLTETECHNIK**
  **GEMEINNÜTZIGE GESELLSCHAFT mbH**
  **D-01309 Dresden (DE)**

(72) Erfinder:
• **Geiger, Lothar, Dr. Dipl.-Ing.**
  **D-01129 Dresden (DE)**

• **Kreis, Hans-Gerald, Dipl.-Wi.-Ing.**
  **D-76307 Karlsbad-Langensteinbach (DE)**
• **Franke, Uwe, Dr. Dipl.-Ing.**
  **D-01277 Dresden (DE)**
• **Weinhold, Klaus, Dipl.-Ing. (FH)**
  **D-01705 Pesterwitz (DE)**
• **Stangl, Manfred, Dipl.-Ing.**
  **D-01219 Dresden (DE)**

(74) Vertreter: **Görg, Klaus, Dipl.-Ing. et al**
  **Hoffmann, Eitle & Partner,**
  **Patent- und Rechtsanwälte,**
  **Arabellastrasse 4**
  **81925 München (DE)**

(54) **Raumbelüftungsgerät**

(57)    Ein Raumbelüftungsgerät weist ein Gehäuse (2) mit zwei getrennten, im wesentlichen parallel verlaufenden Luftkanälen (A, B) auf. In jedem Luftkanal befindet sich ein Ventilator (4, 5), wobei beide Ventilatoren gegenläufig gerichtete Luftstöme erzeugen. Zwischen beiden Luftkanälen (A, B) verlaufen mehrere mit einem Kältemittel gefüllte Wärmerohre in Form von Platten (20), die als Wärmetauscher dienen.

Fig. 1

## Beschreibung

Die vorliegende Erfindung betrifft ein Raumbelüftungsgerät, das zur Belüftung von Innenräumen dient, indem ein Luftaustausch zwischen dem Innenraum und der Außenumgebung hergestellt wird.

Derartige Raumbelüftungsgeräte beziehungsweise Klimageräte sind in einer Ausführung mit Kreuzstromwärmetauschern bekannt, bei der die Luft mit Hilfe von Ventilatoren über den Kreuzstromwärmetauscher geführt wird. Hierbei erfolgt im Winterbetrieb ein Wärmetausch zwischen warmer Abluft und kalter Außenluft. Bei derartigen Raumbelüftungsgeräten sind jedoch akzeptable Rückwärmezahlen in der Größenordnung von 0,6 nur durch sehr große Wärmeübertragungsflächen erreichbar, was zu einem sehr großen spezifischen Bauvolumen der Geräte und einem relativ hohen Druckverlust führt.

Ferner sind Lüftungsgeräte mit einem Kompakt-Wärmespeicher bekannt, bei denen die Strömungsrichtung in bestimmten Zeittakten umgekehrt wird, so daß abwechselnd Abluft beziehungsweise Außenluft über den Wärmespeicher gefördert wird (vgl. DE-OS 42 02 970). Bei derartigen Geräten erweist sich jedoch der alternierende Betrieb als nachteilig, wobei wiederum Rückwärmezahlen in der Größenordnung von 0,6 nur durch relativ große Wärmespeicher erzielbar sind, was zu einem erhöhten Druckverlust führt.

Ferner sind Einraum-Lüftungsgeräte mit einem Kapillarlaufrad bekannt, das zu einer Wärmerückgewinnung dient. Hierbei fördert ein in einem Doppelspiralgehäuse umlaufender Kapillarring gleichzeitig Zuluft und Abluft. Der in einen Ventilator eingelegten Kapillarring durchläuft hierbei die Bereiche der Zuluft- und Abluftansaugung. Die Luftströme, die mittels Fliehkraft durch den Ring gefördert werden, geben die Wärme ab, beziehungsweise nehmen diese auf. Durch eine Vermischung der Luftströme tritt hierbei jedoch eine unerwünschte Stoffübertragung ein und es sind lediglich Rückwärmezahlen in der Größenordnung von 0,45 erreichbar.

Es ist die Aufgabe der vorliegenden Erfindung, ein Lüftungsgerät geringer Baugröße zu schaffen, das eine hohe Wärmeübertragungszahl aufweist.

Die Lösung dieser Aufgabe erfolgt durch ein Raumbelüftungsgerät mit den Merkmalen des Patentanspruchs 1. Vorteilhafte Ausführungsformen der Erfindung sind durch die Unteransprüche gekennzeichnet.

Erfindungsgemäß weist das Raumbelüftungsgerät zwei gegenläufig durchströmte Luftkanäle auf, wobei zwischen den beiden Luftkanälen mehrere mit einem Kältemittel gefüllte Wärmerohre angeordnet sind. Unter diesen Wärmerohren werden sogenannte Heat Pipes verstanden, die als Wärmetauscher dienen und üblicherweise teilevakuiert und innenseitig mit einer porösen Schicht mit Kapillarstruktur ausgekleidet sind. Diese Schicht ist dabei mit einer niedrig siedenden Flüssigkeit getränkt, die am wärmeren Rohrende verdampft und dabei Verdampfungswärme aufnimmt. Am kühleren Ende kondensiert die Flüssigkeit und gibt Kondensationswärme ab. Hierbei fließt das Kondensat durch Kapillarwirkung der Oberflächenschicht wieder zum wärmeren Rohrende zurück, wodurch schon bei einer Temperaturdifferenz von 3 bis 5° C mehrere Kilowatt Wärmeleistung übertragen werden können.

Erfindungsgemäß sind jedoch die Wärmerohre nicht in Rohrform sondern als parallel angeordnete Platten ausgebildet, die innen einen flächigen Hohlraum bilden. Durch diese erfindungsgemäße Anordnung ist ein Raumbelüftungsgerät geschaffen, daß eine hohe Wärmedurchgangszahl aufweist und kompakt aufgebaut ist.

Das Raumbelüftungsgerät ist dabei vorteilhafterweise in die Außenwand eines Raumes eingebaut und verbindet mittels der Luftkanäle den zu belüftenden Raum mit der Außenumgebung.

Nach einer vorteilhaften Ausführungsform der Erfindung können die Platten vertikal angeordnet sein, wobei die Luftkanäle übereinander angeordnet sein können. Bei dieser Ausführungsform ist ein Betreiben des Raumbelüftungsgerätes im Winter- und Sommerbetrieb möglich. Im sogenannten Winterbetrieb, d. h. wenn die Außenluft kälter als die Raumluft ist, wird die Außenluft im oberen Luftkanal angesaugt. Dabei wird an den Wärmerohren die Kondensationswärme des in den Platten befindlichen Kältemittels von der Außenluft aufgenommen und die Raumluft wird im unteren Luftkanal angesaugt. Hierbei entzieht das in den Wärmerohren befindliche Kältemittel der Abluft die Verdampfungswärme und senkt dabei die Ablufttemperatur. Im Sommerbetrieb, d. h. wenn die Raumluft gekühlt werden soll, wird die Außenluft im unteren Luftkanal und die Raumluft im oberen Luftkanal angesaugt.

Nach einer weiteren vorteilhaften Ausführungsform können die Ventilatoren Axialventilatoren sein, deren Förderrichtung vorzugsweise umschaltbar ist. Durch eine solche Ausführungsform läßt sich das erfindungsgemäße Raumbelüftungsgerät sehr kompakt ausbilden, was den Einbau in eine Wand erleichtert. Dadurch, daß die Förderrichtung umschaltbar ist, wird das Umstellen zwischen Winter- und Sommerbetrieb erleichtert. Hierbei kann das Umkehren der Förderrichtung vorteilhafterweise in Abhängigkeit von der Differenz der Temperaturen beider Luftkanäle erfolgen, was zu einem automatischen Wechsel der Betriebszustände führt. Auch lassen sich beide Ventilatoren zur Stoßbe- oder -entlüftung mit gleicher Förderrichtung einstellen.

Nach einer weiteren Ausbildung der Erfindung kann in zumindest einem Luftkanal eine Luftionisationseinrichtung angeordnet sein, die vorzugsweise von einem Luftgütesensor gesteuert wird, der in diesem Luftkanal oder im Raum angeordnet ist. Hierdurch wird neben einer Belüftung und Klimatisierung des Raumes gleichzeitig die Qualität der Raumluft überwacht, wobei bei einem Absinken der Luftqualität die Luftionisationseinrichtung aktiviert werden kann. Die Luftgütesensoren können beispeilsweise den $CO_2$-Gehalt, den Formaldehydgehalt oder den Phenolgehalt der Luft messen.

Nach einer weiteren Ausbildung der Erfindung kann in zumindest einem Luftkanal eine Heizeinrichtung angeordnet sein, deren Steuerung vorzugsweise über einen Temperaturfühler erfolgt. Hierdurch kann im Winterbetrieb ein zusätzliches Erwärmen der angesaugten Luft erfolgen, was bei tiefen Außentemperaturen vorteilhaft ist.

Nach einer weiteren Ausbildung der Erfindung können beide Luftkanäle durch jeweils einen Verschluß verschließbar sein. Hierdurch wird verhindert, daß durch die im Prinzip offenen Luftkanäle ein unerwünschter Zug entsteht, was insbesondere bei windigem Wetter von Vorteil ist. Hierbei kann der Verschluß in Form von automatisch betätigbaren Klappen ausgebildet sein, die sich bei ausgeschaltetem Raumbelüftungsgerät oder im Stand-by-Betrieb automatisch schließen.

Nach einer weiteren Ausbildung der Erfindung kann der Verschluß alternativ als Gitter ausgeführt sein, dessen Gitterstäbe in der offenen Stellung direkt vor und/oder hinter den Schmalseiten der Platten angeordnet sind. Hierbei sind die Gitterstäbe zum Verschließen der Luftkanäle in die Plattenzwischenräume verschwenkbar. Eine solche Ausbildung des Verschlusses besitzt den Vorteil, daß keine großflächigen Elemente bewegt werden müssen.

Nach einer weiteren Ausführungsform der Erfindung können in zumindest einem Luftkanal Feinfilter, Grobfilter oder Pollenfilter vorgesehen sein, die insbesondere aus dem Gehäuse entnehmbar und spülmaschinenfest sein können. Hierdurch läßt sich das Eindringen von unerwünschten Partikeln in den Raum verhindern, wobei eine einfache Wartung des Gerätes gewährleistet ist.

Nach einer weiteren vorteilhaften Ausführungsform kann das erfindungsgemäße Raumbelüftungsgerät eine Steuerelektronik aufweisen, die insbesondere drahtlos und/oder adressierbar über eine Zentralsteuerung ansteuerbar ist. Durch eine derartige Ansteuerung lassen sich mehrere Lüftungsgeräte zentral bedienen, wobei auch ein einzelnes Ansteuern eines bestimmten Gerätes möglich ist. Hierdurch läßt sich auch die Raumtemperatur in einem bestimmten Raum getrennt von den übrigen Räumen einstellen. Die Ansteuerung der Steuerelektronik kann dabei vorteilhafterweise über das Stromnetz erfolgen, indem ein Modulator und ein Demodulator zwischen Zentralsteuerung und Steuerelektronik geschaltet ist, wobei Adreß- und Steuerinformationen übertragen werden.

Gleichzeitig können Maßnahmen zur Fehlerkorrektur vorgesehen werden.

Nachfolgend wird die vorliegende Erfindung rein beispielhaft anhand vorteilhafter Ausführungsformen und unter Bezugnahme auf die beigefügten Zeichnungen beschrieben. Es zeigen:

Fig. 1          ein Querschnitt durch ein Raumbelüftungsgerät;

Fig. 2A und 2B     eine Teilquerschnittsansicht durch Platten des Wärmerohres und Gitterstäbe des Verschlusses; und

Fig. 3          eine schematische Darstellung der Ansteuerung des Raumbelüftungsgerätes.

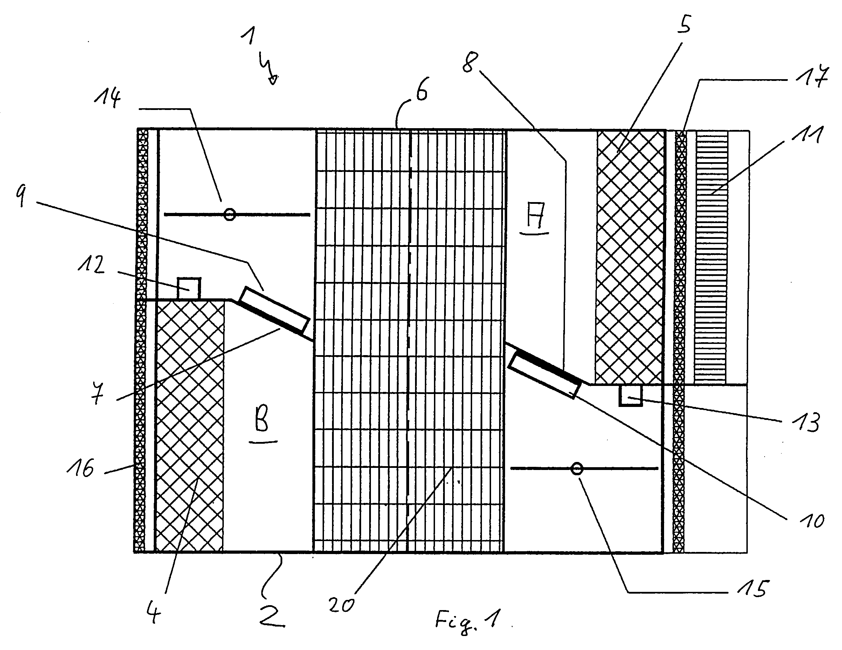

Das in Fig. 1 dargestellte Raumbelüftungsgerät 1 weist ein Gehäuse 2 auf, das zur Anpassung an unterschiedliche Mauerstärken in Teleskopbauweise ausgeführt ist. Durch Trennbleche 7 und 8 sind in dem Gehäuse 2 zwei im wesentlichen parallel verlaufende Luftkanäle A und B ausgebildet. Hierbei befindet sich der Luftkanal A über dem Luftkanal B. Die Luftkanäle A und B verlaufen durch das gesamte Gehäuse 2 und verbinden die Raumluft eines zu belüftenden Raumes mit der Außenluft, wenn das Raumbelüftungsgerät in die Außenwand des Raumes eingebaut ist.

In dem Luftkanal A befindet sich auf der in Fig. 1 rechten Seite ein Axialventilator 5 und auf der diagonal gegenüberliegenden Seite des Gehäuses 2 ist in dem Luftkanal B ein Akialventilator 4 angeordnet. Hierbei füllen die Ventilatoren 4 und 5 den gesamten Kanalquerschnitt aus. Die Förderrichtung der Axialventilatoren ist umschaltbar, wobei jedoch außer zur Stoßbelüftung beide Ventilatoren 4 und 5 so geschaltet sind, daß stets gegenläufig gerichtete Luftströme erzeugt werden.

In der Mitte zwischen beiden Ventilatoren 4 und 5 ist ein Wärmetauscher 6 angeordnet, der mehrere mit dem Kältemittel R 134a gefüllte Wärmerohre (Heat Pipes) aufweist. Hierbei sind die Wärmerohre als Platten 20 ausgebildet, wobei die Platten parallel nebeneinander angeordnet sind und miteinander verbunden sind. Die Anordnung der Platten 20 ist so gewählt, daß zwischen diesen jeweils ein Zwischenraum verbleibt, durch den die an- oder abgesaugte Luft strömen kann. Gleichzeitig verlaufen die Platten 20 des Wärmetauschers durch beide Luftkanäle A und B. Hierbei setzen sich die Trennbleche 7 und 8 durch den Wärmetauscher 6 fort, um eine vollständige Kanaltrennung zu bewirken.

In beiden Luftkanälen A und B sind nicht dargestellte Temperatursensoren vorgesehen, die ein Umkehren der Förderrichtung der Ventilatoren 4 und 5 in Abhängigkeit der gemessenen Temperaturdifferenz auslösen.

In beiden Luftkanälen A und B ist jeweils eine Luftionisationseinrichtung 9 und 10 angeordnet, die eine Verbesserung der Luftqualität bewirkt. Hierbei sind die Trennbleche 7 und 8 zwischen den Ventilatoren 4 und 5 und dem Wärmetauscher etwas abgewinkelt, so daß in diesem abgewinkelten Bereich die Luftionisationseinrichtungen untergebracht werden können.

Der Einlaß- beziehungsweise Auslaß des oberen Kanales A ist mit einem Heizregister 11 versehen, das über einen nicht dargestellten Temperatursensor in Betrieb gesetzt wird. Ferner befindet sich in beiden Luftkanälen ein Grobfilter 16, der ein Eindringen von Blättern, Ungeziefer oder dergleichen verhindert. An dem gegenüberliegenden Ende der Luftkanäle ist ein Pollenfilter 17 angeordnet. Beide Filter sind aus dem Gehäuse 2 entnehmbar. Der Grobfilter kann in einer Spülmaschine gereinigt werden.

Beide in Fig. 1 dargestellten Luftkanäle A und B können durch automatisch betätigte Klappen 14 und 15 verschlossen werden, um einen Zug durch die Luftkanäle zu verhindern, wenn das Gerät nicht in Betrieb ist.

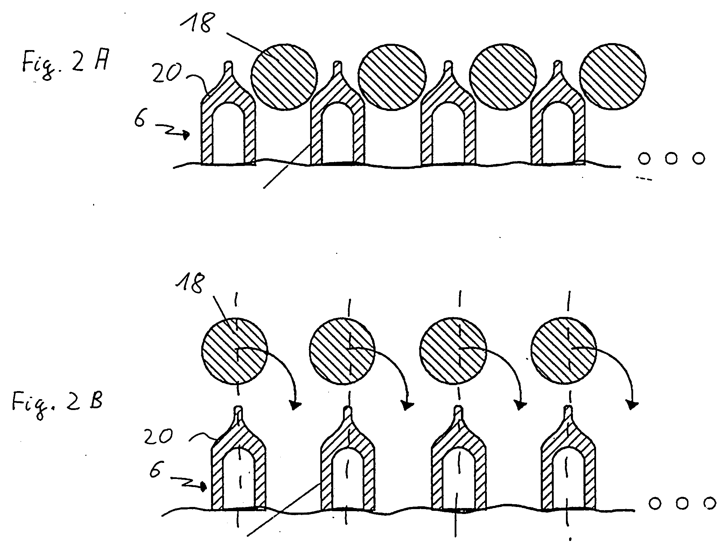

Eine Alternative zu den Klappen 14 und 15 zum Verschließen der Luftkanäle A und B ist in den Fig. 2A und 2B dargestellt. Bei dieser alternativen Ausführungsform dient jeweils ein Gitter zum Verschließen der Luftkanäle A und B, wobei die Gitter in die Zwischenräume schwenkbar sind, die durch die Platten 20 gebildet werden. Sofern Luft durch die Luftkanäle A und B strömen soll, werden die Gitterstäbe 18 der Gitter in die in Fig. 2B dargestellte Stellung geschwenkt. Zum Schließen der Luftkanäle wird die in Fig. 2A dargestellte Stellung gewählt, in der die Zwischenräume zwischen den Platten 20 durch die Gitterstäbe 18 vollkommen verschlossen sind. Hierdurch lassen sich mit nur einer Betätigungsmechanik beide Luftkanäle A oder B gleichzeitig verschließen.

Auch wenn die Gitterstäbe 18 in den Figuren einen kreisförmigen Querschnitt besitzen, können diese ebenso einen ovalen oder lanzettenförmigen Querschnitt aufweisen. In diesem Fall können die Gitterstäbe zum Verschließen der Luftkanäle um 90° in die Plattenzwischenräume geschwenkt werden.

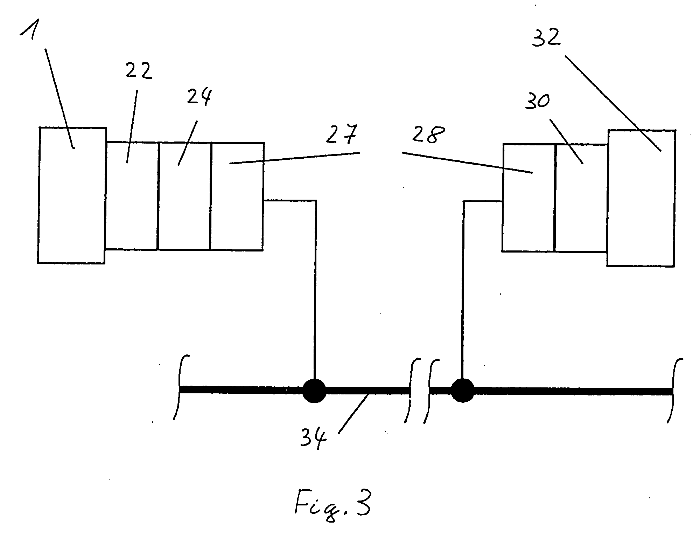

Fig. 3 zeigt schematisch die elektronische Ansteuerung des in Fig. 1 dargestellten Lüftungsgerätes. Die Steuerelektronik 22 des Raumbelüftungsgerätes 1 wird dabei von einer zentralen Fernsteuerung 32 angesteuert, die über das Stromnetz 34 (230V) mit der Steuerelektronik 22 verbunden ist. Zu diesem Zweck ist zwischen der Zentralsteuerung 32 und einem Netzanschlußteil 28 ein Modulator 30 vorgesehen und zwischen einem Netzanschlußteil 27 des Lüftungsgerätes 1 und der Steuerelektronik 22 befindet sich ein Demodulator 24. Hierdurch können die Steuerinformationen über das Stromnetz von der Zentralsteuerung 32 zu der Steuerelektronik 22 des Lüftungsgerätes 1 übertragen werden, wobei die Übertragungssicherheit der Adreß- und Steuerinformationen durch Fehlerkorrekturmaßnahmen unterstützt wird. Auf diese Weise können auch mehrere Lüftungsgeräte 1 von der zentralen Fernsteuerung 32 angesteuert werden, wobei lediglich der Anschluß an die übliche Netzspannung erforderlich ist.

Das Raumbelüftungsgerät ist raumseitig mit einer Dekorabdeckung versehen, die auch zur Aufnahme von Funktionselementen (Heizregister, Sensorik) dient. Eine außenseitige Abdeckung dient zum Abhalten von Schlagregen.

Nachfolgend wird die Betriebsweise des erfindungsgemäßen Raumbelüftungsgerätes beschrieben. Im Winterbetrieb, d. h. wenn die Außenluft kälter als die Raumluft ist, wird die Außenluft im oberen Luftkanal A durch den Ventilator 5 angesaugt. Von der angesaugten Außenluft wird die Kondensationswärme des in den Platten 20 befindlichen Kältemittels aufgenommen.

Hierbei beträgt die Temperaturerhöhung $\Delta\vartheta = 0{,}65\,(t_{innen} - t_{außen})$. Die Raumluft wird durch den unteren Luftkanal B von dem Ventilator 4 abgesaugt. Hierbei entzieht das in den Wärmerohren 20 befindliche Kältemittel der Abluft die Verdampfungswärme und senkt dabei die Ablufttemperatur um die oben beschriebene Temperaturdifferenz. Im Sommerbetrieb wird zum Kühlen der Innenluft die Außenluft im unteren Luftkanal B angesaugt und dabei im Bereich des Wärmetauschers abgekühlt. Die Raumluft wird durch den oberen Kanal A abgesaugt.

**Patentansprüche**

1. Raumbelüftungsgerät, gekennzeichnet durch

   - ein Gehäuse (2) mit zwei getrennten, im wesentlichen parallel verlaufenden Luftkanälen (A, B),
   - einen Ventilator (4, 5) in jedem Luftkanal, wobei beide Ventilatoren gegenläufig gerichtete Luftströme erzeugen, und
   - mehrere mit einem Kältemittel gefüllte Wärmerohre, die zwischen beiden Luftkanälen (A, B) verlaufend angeordnet sind,
   - wobei die Wärmerohre als parallel angeordnete Platten (20) ausgebildet sind, die insbesondere miteinander verbunden sind.

2. Vorrichtung nach Anspruch 1, dadurch gekennzeichnet, daß die Platten (20) vertikal und die Luftkanäle (A, B) übereinander angeordnet sind.

3. Vorrichtung nach einem der vorstehenden Ansprüche, dadurch gekennzeichnet, daß die Ventilatoren (4, 5) Akialventilatoren sind, deren Förderrichtung vorzugsweise umschaltbar ist.

4. Vorrichtung nach Anspruch 1, 2 oder 3, dadurch gekennzeichnet, daß ein Umkehren der Förderrichtung der Ventilatoren (4, 5) in Abhängigkeit von der Temperaturdifferenz beider Luftkanäle erfolgt.

5. Vorrichtung nach einem der vorstehenden Ansprüche, dadurch gekennzeichnet, daß in zumindest einem Luftkanal (A, B) eine Einrichtung zur Luftionisation (9, 10) angeordnet ist, die vorzugsweise von einem Luftgütesensor (12, 13) gesteuert wird.

6. Vorrichtung nach einem der vorstehenden Ansprüche, dadurch gekennzeichnet, daß in zumindest einem Luftkanal (A, B) eine Heizeinrichtung (11) angeordnet ist, deren Steuerung vorzugsweise über einen Temperaturfühler erfolgt.

7. Vorrichtung nach einem der vorstehenden Ansprüche,
dadurch gekennzeichnet, daß zumindest ein Ventilator (4, 5) von einem in einem Luftkanal (A, B) und/oder einem im Raum angeordneten Luftgütesensor (12, 13) gesteuert wird.

8. Vorrichtung nach einem der vorstehenden Ansprüche,
dadurch gekennzeichnet, daß beide Luftkanäle (A, B) durch jeweils einen Verschluß (14, 15, 18) verschließbar sind.

9. Vorrichtung nach Anspruch 8,
dadurch gekennzeichnet, daß der Verschluß in Form von automatisch betätigbaren Klappen (14, 15) ausgeführt ist.

10. Vorrichtung nach Anspruch 8,
dadurch gekennzeichnet, daß der Verschluß als Gitter ausgeführt ist, dessen Gitterstäbe (18) in der offenen Stellung direkt vor und/oder hinter den Schmalseiten der Platten (20) angeordnet sind, wobei die Gitterstäbe (18) zum Verschließen der Luftkanäle (A, B) in die Plattenzwischenräume verschwenkbar sind.

11. Vorrichtung nach einem der vorstehenden Ansprüche,
dadurch gekennzeichnet, daß in zumindest einem Luftkanal (A, B) ein Filter vorgesehen ist, der insbesondere als Fein- und/oder Grob- (16) und/oder Pollenfilter (17) ausgebildet ist.

12. Vorrichtung nach einem der vorstehenden Ansprüche,
dadurch gekennzeichnet, daß die Platten (20) und/oder der Filter (16, 17) aus dem Gehäuse (2) entnehmbar und spülmaschinenfest sind.

13. Vorrichtung nach einem der vorstehenden Ansprüche,
dadurch gekennzeichnet, daß diese eine Steuerelektronik (22) aufweist, die insbesondere drahtlos und/oder adressierbar über eine Zentralsteuerung (32) ansteuerbar ist.

14. Vorrichtung nach Anspruch 13,
dadurch gekennzeichnet, daß die Ansteuerung über das Stromnetz durch Zwischenschaltung eines Modulators (30) und eines Demodulators (24) erfolgt, wobei Adreß- und Steuerinformationen, unterstützt durch Maßnahmen zur Fehlerkorrektur, übertragen werden.

Fig. 1

Fig. 2 A

18

20

6

Fig. 2 B

18

20

6

EP 0 735 330 A1

Fig. 3

Europäisches
Patentamt

**EUROPÄISCHER RECHERCHENBERICHT**

Nummer der Anmeldung

EP 95 10 4479

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US-A-4 333 520 (YANADORI ET AL.) 8.Juni 1982 * Anspruch 1; Abbildungen * | 1,2,8,9 | F24F12/00 F28D15/02 |
| A | DE-A-34 05 584 (WEISS TECHNIK GMBH UMWELT-KLIMA-MESSTECHNIK) 22.August 1985 * Seite 8, letzter Absatz – Seite 15, letzter Absatz; Abbildungen * | 1,6, 10-12 | |
| A | WO-A-95 02157 (OY KOLSTER AB) 19.Januar 1995 * Anspruch 1; Abbildungen * | 1,3,4, 13,14 | |

| | RECHERCHIERTE SACHGEBIETE (Int.Cl.6) |
|---|---|
| | F24F F28D B60H |

Der vorliegende Recherchenbericht wurde für alle Patentansprüche erstellt

| Recherchenort | Abschlußdatum der Recherche | Prüfer |
|---|---|---|
| DEN HAAG | 24.August 1995 | Gonzalez-Granda, C |